# EUROPÄISCHE PATENTSCHRIFT

(11) **EP 3 351 084 B1**
(45) Veröffentlichungstag und Bekanntmachung des Hinweises auf die Patenterteilung: **20.01.2021**
(21) Anmeldenummer: 17186081.0
(22) Anmeldetag: 14.08.2017
(51) Int. Cl.: A01D 34/37

(54) **SCHNEIDWERK FÜR LANDWIRTSCHAFTLICHE ARBEITSMASCHINE**
CUTTING UNIT FOR AGRICULTURAL VEHICLE
BARRE DE COUPE POUR ENGIN AGRICOLE

(30) Priorität: 24.01.2017 DE 102017101270
(43) Veröffentlichungstag der Anmeldung: 25.07.2018
(73) Patentinhaber: CLAAS Selbstfahrende Erntemaschinen GmbH, 33428 Harsewinkel (DE)
(72) Erfinder: Fischer, Frédéric, 59823 Arnsberg (DE); Sprigade, Daniel, 59427 Unna (DE); Heymann, Philipp, 59519 Möhnesee Wamel (DE); Kettelhoit, Boris, 33335 Gütersloh (DE); Neitemeier, Dennis, 59510 Lippetal (DE)
(74) Vertreter: CLAAS Gruppe

(56) Entgegenhaltungen:
- DE-A1- 2 419 361
- DE-A1-102014 010 684

## Beschreibung

Die vorliegende Erfindung betrifft ein Schneidwerk für eine selbstfahrende Erntemaschine gemäß dem Oberbegriff des Anspruchs 1.

Selbstfahrende Mähdrescher mit auf das jeweilige Erntegut abgestimmten Schneidwerken sind hinlänglich bekannt. Die Schneidwerke weisen dabei häufig linear oszillierende Messerbalken zum Schneiden des Erntegutes auf, welche mechanisch, hydraulisch oder elektrisch angetrieben werden. Herkömmlicherweise erfolgt der Antrieb des Messerbalkens dabei mittels rotatorischen Antrieben, welche die mechanische Antriebsleistung von einem Fahrzeugmotor erhalten. Zum Antrieb des sich linear bewegenden Messerbalkens wird dabei häufig ein Getriebe eingesetzt, welches das rotatorische Antriebsmoment in lineare/ translatorische Antriebskräfte umwandelt. Durch die rotatorischen Antriebe und das Übersetzten in lineare Antriebskräfte werden jedoch bei zunehmender Schnittfrequenz Querschwingungen und Vibrationen im Schneidwerk erzeugt, welche den Antriebsstrang selbst und das restliche Schneidwerk beschädigen und zudem vom Bediener als unangenehm empfunden werden können.
Die Druckschrift DE 10 2014 003 493 offenbart dafür phasenversetzt angetriebene Messerbalkensegmente, wodurch Vibrationen reduziert werden. Der mechanische Antrieb ist über eine rotierende Antriebsscheibe mit den Messerbalkensegmenten kraftschlüssig gekoppelt. Die Messerbalkensegmente sind dabei drehwinkelversetzt an der Antriebsscheibe angeordnet.
Nachteilig an dieser Ausführungsform ist die aufwendige mechanische Übersetzung der rotatorischen Antriebsbewegung in eine lineare Antriebsbewegung, welche zudem weiterhin Vibrationen verursachen kann.
Die Druckschrift DE 10 2014 010 684 A1 offenbart ein Schneidwerk mit zwei oder mehr Messerbalkensegmenten, die jeweils einen elektrischen Linearmotor aufweisen, welche versetzt zueinander betreibbar sind, sodass Querschwingungen vermieden werden. Nachteilig ist hier eine aufwendige Regelung der elektrischen Linearmotoren, um einen versetzten Betrieb der elektrischen Antriebe zu bewirken.

Aufgabe der Erfindung ist es, die beschriebenen Nachteile des Standes der Technik zu beheben und insbesondere ein verbessertes Schneidwerk zu schaffen, das die Vibrationen, den konstruktiven Aufwand und die Kosten reduziert und dabei hohe Schnittfrequenzen ermöglicht.
Die Aufgabe wird gelöst mit einem Schneidwerk mit den Merkmalen des unabhängigen Patentanspruchs 1, bzw. mit einer selbstfahrenden Erntemaschine mit den Merkmalen des unabhängigen Patentanspruchs 12. Vorteilhafte Ausführungsformen sind den abhängigen Ansprüchen entnehmbar.
Indem ein Schneidwerk für eine selbstfahrende Erntemaschine einen mehrteiligen Messerbalken umfasst, wobei der Messerbalken mindestens zwei Messerbalkensegmente umfasst, wobei jedem Messerbalkensegment ein elektrischer Antrieb zugeordnet ist, und die Messerbalkensegmente mittels der elektrischen Antriebe linear oszillierend antreibbar sind, wobei das Schneidwerk und/oder die selbstfahrende Erntemaschine ein Wechselspannungsnetz mit zumindest zwei Phasen aufweist, wobei jede der Phasen eine zueinander phasenversetzte Wechselspannung aufweist, und jedem elektrischen Antrieb zumindest eine der Phasen zugeordnet ist, wird auf technisch einfache und kostengünstige Weise sichergestellt, dass jedem elektrischen Antrieb jeweils eine Wechselspannung zur Verfügung steht, welche die gleiche Frequenz aufweist, jedoch einen stets versetzten Schwingungsverlauf zu den Wechselspannungen der übrigen elektrischen Antrieben aufweist. Eine zusätzliche elektronische Schaltung, wie zum Beispiel ein Umrichter, zur Erzeugung von Wechselspannungen mit gleicher Frequenz und mit versetzen Schwingungsverlauf für die jeweiligen elektrischen Antriebe entfällt.
Um einen vibrationsarmen Betrieb des Schneidwerks und hohe Schnittfrequenzen zu ermöglichen, ist zudem vorgesehen, dass die Phasen den elektrischen Antrieben derart zugeordnet sind, dass die elektrischen Antriebe mit zueinander phasenversetzten Wechselspannungen angetrieben werden und die elektrischen Antriebe die Messerbalkensegmente phasenversetzt linear oszillierend antreiben. Querschwingungen, die durch jeden elektrischen Antrieb und dessen Messerbalkensegmente verursacht werden, werden durch die Querschwingungen der anderen elektrischen Antriebe dabei zum Großteil neutralisiert. Die Vibrationen des gesamten Schneidwerks werden reduziert. Wesentlich ist die Erkenntnis, dass dazu ein bereits vorhandener Phasenversatz der Wechselspannungen in den Phasen eines Wechselspannungsnetzes verwendet wird, um einen gleichen Phasenversatz bei den elektrischen Antrieben und den Messerbalkensegmenten zu erzeugen. Somit wird ein elektrischer Phasenversatz auf einen mechanischen Phasenversatz direkt übertragen. Dadurch ist vorzugsweise keine Steuerung des Phasenversatzes zwischen den elektrischen Antrieben 15 mittels der Steuer- und Regeleinheit 25 erforderlich.

In einer vorteilhaften Ausgestaltung der Erfindung lassen sich die elektrischen Antriebe auf technisch einfache Weise mit phasenversetzten Wechselspannungen versorgen, indem die selbstfahrende Erntemaschine und/oder das Schneidwerk eine als Generator, insbesondere als Drehstromgenerator, ausgebildete Wechselspannungsquelle mit Phasen aufweist, und jeder elektrische Antrieb an jeweils eine Phase des Generators oder zwischen zwei Phasen des Generators angeschlossen ist.

In einer weiteren vorteilhaften Ausgestaltung sind die elektrischen Antriebe und die Wechselspannungsquelle in einer Sternschaltung miteinander verschaltet, sodass jedem elektrischen Antrieb jeweils eine Phase des Wechselspannungsnetzes zugeordnet ist. Dadurch können zeitgleich auftretende unterschiedliche Lasten an den elektrischen Antrieben auf einfache Weise ausgeglichen werden, ohne dass der Phasenversatz zwischen den Messerbalkensegmenten verändert wird. Zeitgleich auftretenden unterschiedliche Lasten an den elektrischen Antrieben können zum Beispiel durch eine variierende Erntegutdichte entlang des Messerbalkens hervorgerufen werden.

In einer weiteren vorteilhaften Ausgestaltung sind die elektrischen Antriebe und die Wechselspannungsquelle in einer Dreieckschaltung miteinander verschaltet, sodass jedem elektrischen Antrieb jeweils eine Kombination aus zwei Phasen des Wechselspannungsnetzes zugeordnet ist. Es ist zudem kein Neutralleiter erforderlich.

Damit sich Querschwingen bestmöglich neutralisieren und die Vibrationen des Schneidwerks reduziert werden, ist in einer vorteilhaften Ausgestaltung der Erfindung vorgesehen, dass bei einer identischen Anzahl an elektrischen Antrieben und Phasen jedem elektrischen Antrieb jeweils eine Phase oder jeweils eine Kombination von zwei Phasen zugeordnet ist.

Um im Falle einer voneinander abweichenden Anzahl von elektrischen Antrieben und Phasen die Querschwingen bestmöglich zu neutralisieren und die Vibrationen des Schneidwerks zu reduzieren, ist in einer weiteren vorteilhaften Ausgestaltung der Erfindung vorgesehen, dass bei einer abweichenden Anzahl an elektrischen Antrieben und Phasen die einzelnen Phasen oder Kombinationen von zwei Phasen im Wesentlichen gleichverteilt den elektrischen Antrieben zugeordnet sind. Zwar erfolgt die Neutralisierung der Querschwingungen, welche von den elektrischen Antrieben 15 mit den Messerbalkensegmenten 17,18,19 verursacht werden, dann nicht im vollen Umfang, jedoch erfolgt eine teilweise Neutralisierung der Querschwingungen.

In einer vorteilhaften Ausgestaltung weist das Schneidwerk und/oder die selbstfahrende Erntemaschine ein erstes Wechselspannungsnetz mit zumindest zwei Phasen und einem ersten Generator, und mindestens ein weiteres Wechselspannungsnetz mit zumindest zwei weiteren Phasen und einem weiteren Generator auf, wobei die Generatoren mechanisch kraftschlüssig miteinander angeordnet sind. Dadurch kann die Anzahl der Phasen auf einfache technische Weise an die Anzahl der elektrischen Antriebe angepasst werden. Parallelschaltungen und/oder Reihenschaltungen von elektrischen Antrieben können dadurch vermieden werden.

Eine technisch besonders effiziente Umsetzung der Erfindung wird in einer vorteilhaften Weiterbildung der Erfindung dann erzielt, wenn die elektrischen Antriebe Linearantriebe sind und phasenversetzt zueinander linear oszillierend betrieben werden. Durch die Bewegung der Läufer der Linearantriebe auf zueinander parallelen Achsen werden die Querschwingungen jedes Linearantriebes und jedem Messerbalkensegment besonders effizient neutralisiert. Dies ermöglicht eine höhere Schnittfrequenz der Messerbalkensegmente. Zudem ermöglicht der Linearantrieb eine direkte lineare Bewegung der Messerbalkensegmente ohne zusätzliche mechanische Übersetzungen, wie sie zum Beispiel bei Rotationsantrieben in Kombination mit linear oszillierenden Messerbalkensegmenten notwendig sind.

Eine besonders kosteneffiziente Umsetzung der Erfindung wird in einer vorteilhaften Weiterbildung der Erfindung dann erzielt, wenn das Schneidwerk und/oder die selbstfahrende Erntemaschine ein Wechselspannungsnetz mit drei Phasen, einen Generator mit den gleichen Phasen und der Messerbalken drei Messerbalkensegmente aufweist, wobei jedem Messerbalkensegment ein Linearantrieb zugeordnet ist, und jedem Linearantrieb jeweils eine der Phasen mittels einer Sternschaltung zugeordnet ist, sodass jedes Messerbalkensegment phasenversetzt linear oszillierend angetrieben wird. Generatoren mit drei Phasen sind besonders kostengünstig, während drei elektrische Antriebe mit je einem Messerbalkensegment ein breites Spektrum an Schneidwerksbreiten ermöglichen.

Eine weitere, besonders kosteneffiziente Umsetzung der Erfindung wird in einer vorteilhaften Weiterbildung der Erfindung dann erzielt, wenn das Schneidwerk und/oder die selbstfahrende Erntemaschine ein Wechselspannungsnetz mit drei Phasen, einen Generator mit den gleichen Phasen und der Messerbalken drei Messerbalkensegmente aufweist, wobei jedem Messerbalkensegment ein Linearantrieb und jedem Linearantrieb jeweils eine der Kombinationen von zwei Phasen mittels einer Dreieckschaltung zugeordnet ist, sodass jedes Messerbalkensegment phasenversetzt linear oszillierend angetrieben wird.

Die vorliegende Erfindung wird nachstehend anhand von in den Zeichnungen dargestellten Ausführungsbeispielen näher erläutert. Es zeigen:
- Fig. 1: schematisch eine Ansicht von oben auf einen Mähdrescher mit einem Getreideschneidwerk und eine Ausschnittsvergrößerung eines elektrischen Linearantriebes;
- Fig. 2: eine schematische Darstellung zweier alternativer Verschaltungen der elektrischen Antriebe mit dem Generator und zwar in (a) einer Sternschaltung und in (b) einer Dreieckschaltung.

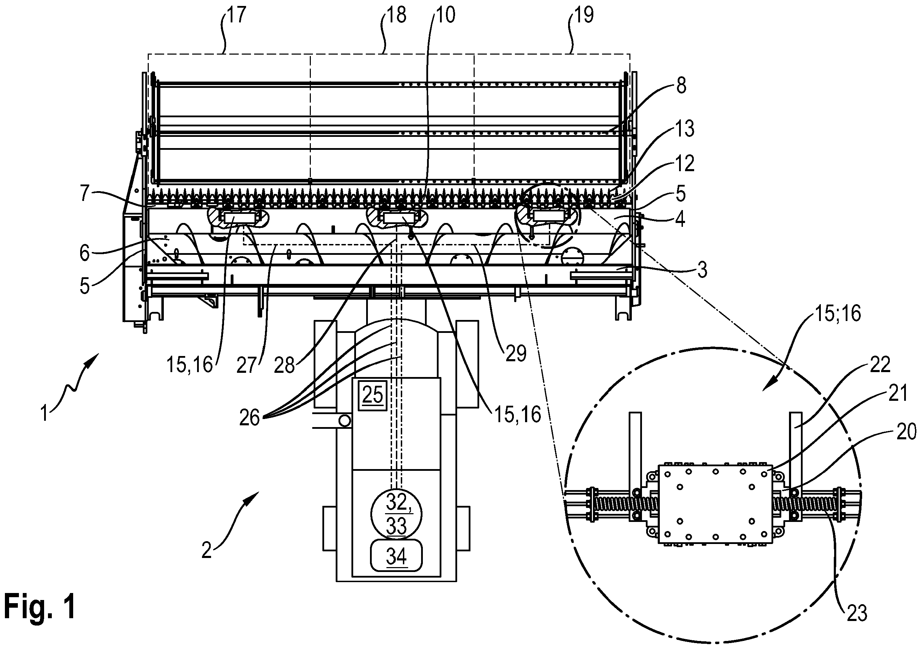

Fig. 1 zeigt eine schematische Draufsicht auf eine als Mähdrescher ausgebildete selbstfahrende Erntemaschine 2 mit einem als Getreideschneidwerk ausgebildeten Schneidwerk 1 von an sich bekannter Bauart. Es liegt im Rahmen der Erfindung, dass das Schneidwerk 1 auch als ein anderer Schneidwerkstyp ausgeführt sein kann. Ein Trägerrahmen 3 des Schneidwerks 1 umfasst einen im Wesentlichen horizontalen Schneidtisch 4 und vertikale Seitenwangen 5 an einem linken und rechten Rand des Schneidtisches 4. Zwischen beiden Seitenwangen 5 ist eine Querförderschnecke 6 angeordnet. Des Weiteren ist zwischen den Seitenwangen 5 eine Haspel 8 angeordnet. Entlang einer Vorderkante 7 des Schneidtisches 4 ist ein mehrgliedriger Messerbalken 10 angeordnet. Der Messerbalken 10 weist mindestens zwei Messerbalkensegmente 17,18,19 auf. Im hier vorliegenden Beispiel weist der Messerbalken 10 drei voneinander unabhängig bewegbare Messerbalkensegmente 17,18,19 auf. Sie sind horizontal verschiebbar an der Vorderkante 7 des Schneidtisches 4 angeordnet und nehmen im Wesentlichen jeweils ein Drittel der Arbeitsbreite des Schneidwerks 1 ein. Jedes Messerbalkensegment 17,18,19 umfasst eine Schiene mit daran in einer Reihe angeordneten Klingen 12. Des Weiteren weist der Messerbalken 10 Gegenschneiden 13 auf. Die Gegenschneiden 13 sind im vorliegenden Beispiel am Messerbalken befestigt. Die Klingen 12 oszillieren durch oder entlang der Gegenschneiden 13.
Im hier vorliegenden Beispiel ist an jedem Messerbalkensegment 17,18,19 ein elektrischer Antrieb 15 angeordnet. Dabei sind die elektrischen Antriebe 15 unterhalb des Schneidtisches 4 angeordnet. Alternativ sind die Messerbalkensegmente 17,18,19 auch mit weniger oder mehr elektrischen Antrieben 15 antreibbar. Jeder elektrische Antrieb 15 treibt das jeweilige Messerbalkensegment 17,18,19 entlang der Vorderkante 7 des Schneidtisches 4 linear oszillierend an.
Das Schneidwerk 1 und/oder die selbstfahrende Erntemaschine 2 weisen zudem ein Wechselspannungsnetz 26 mit zumindest zwei Phasen, im hier dargestellten Beispiel mit drei Phasen 27,28,29, auf. Dabei weist jede der Phasen 27,28,29 eine zueinander phasenversetzte Wechselspannung auf. Mit anderen Worten weist jede Phase 27,28,29 eine zur nächsten Phase 27,28,29 phasenversetzte Wechselspannung auf.

Erfindungsgemäß ist nun jedem elektrischen Antrieb 15 zumindest eine Phase 27,28,29 des erfindungsgemäßen Wechselspannungsnetzes 26 zugeordnet. Bevorzugt ist dabei jedem elektrischen Antrieb 15 jeweils eine andere Phase 27,28,29 oder eine jeweils andere Kombination aus zwei Phasen 27,28,29 in noch näher zu beschreibender Weise zugeordnet.

Vorzugsweise sind die Phasen 27,28,29 dabei den elektrischen Antrieben 15 derart zugeordnet, sodass die elektrischen Antriebe 15 mit zueinander phasenversetzten Wechselspannungen angetrieben werden. Die elektrischen Antriebe 15 treiben ebenfalls die Messerbalkensegmente 17,18,19 phasenversetzt linear oszillierend an. Somit wird ein Phasenversatz der Wechselspannungen der Phasen 27,28,29 zueinander direkt auf die Oszillation der Messerbalkensegmente 17,18,19 übertragen. Dabei sind die elektrischen Antriebe 15 vorzugsweise direkt an die Phasen 27,28,29 angeschlossen.

In dem hier aufgeführten Ausführungsbeispiel weisen die selbstfahrende Erntemaschine 2 und/oder das Schneidwerk 1 des Weiteren eine als Generator 32 ausgebildete Wechselspannungsquelle 33 mit Phasen 27,28,29 auf. Die Wechselspannungsquelle 33 stellt die Wechselspannung für die Phasen 27,28,29 des Wechselspannungsnetzes 26 zur Verfügung. Besonders vorteilhaft ist dabei die Anordnung des Generators 32 am Schneidwerk 1, da hierdurch keine Nachrüstungen an der selbstfahrenden Erntemaschine 2 erforderlich sind. Vorzugsweise ist der Generator 32 ein an sich bekannter und daher nicht weiter erläuterter Drehstromgenerator. Der Generator 32 generiert zueinander phasenversetzte Wechselspannungen an den Phasen 27,28,29. Dabei entsprechen die Phasen 27,28,29 im Wechselspannungsnetz 26 vorzugsweise den Phasen 27,28,29 des Generators 32. Vorzugsweise ist jeder elektrische Antrieb 15 an jeweils eine Phase 27,28,29 des Generators 32 oder zwischen zwei Phasen 27,28,29 des Generators 32 angeschlossen. Besonders bevorzugt ist jeder elektrische Antrieb 15 an jeweils eine andere Phase 27,28,29 des Generators 32 oder zwischen einer anderen Kombination zweier Phasen 27,28,29 des Generators 32 angeschlossen. Der Generator 32 kann durch einen Fahrzeugantrieb 34, zum Beispiel eine Verbrennungskraftmaschine, angetrieben werden.

Insbesondere kann vorgesehen sein, dass die elektrischen Antriebe 15 Linearantriebe 16 sind. Vorzugsweise werden die Linearantriebe 16 phasenversetzt zueinander linear oszillierend betrieben. Die Ausschnittsvergrößerung in Figur 1 zeigt eine detailliertere Ansicht einer Ausgestaltungsform eines Linearantriebes 16. Der an sich bekannte Linearantrieb 16 weist einen Aufbau auf, wie er beispielsweise hinlänglich aus DE 102014 010 684 bekannt ist. Es liegt im Rahmen der Erfindung, andersartig aufgebaute elektrische Antriebe 15, insbesondere andersartig aufgebaute Linearantriebe 16, zu verwenden, um die Messerbalkensegmente 17,18,19 anzutreiben. Es ist ebenfalls denkbar, den elektrischen Antrieb 15 als Rotationsantrieb auszubilden.
Im vorliegenden Ausführungsbeispiel umfasst jeder Linearantrieb 16 einen Läufer 20 und einen Stator 21. Dabei ist der Läufer 20 des Linearantriebs 16 mittels Beschlägen 22 an den Messerbalkensegmenten 17,18,19 befestigt. Alternativ kann der Läufer 20 auch in dem Messerbalkensegment 17,18,19, zum Beispiel in einer die Klingen 12 aufnehmenden Schiene, integriert sein. Der Läufer 20 und der Stator 21 sind als Magneten ausgeführt, wobei mindestens einer von Ihnen als ein Elektromagnet ausgebildet ist. Durch Anlegen einer Spannung, sodass an dem Läufer 20 und an dem Stator 21 jeweils Magnetfelder vorliegen, wird der Läufer 20 in eine Richtung beschleunigt. Jede Stromrichtung treibt den Läufer 20 dabei in eine bestimmte Richtung an. Durch Wechseln der Stromrichtung am Läufer 20 oder am Stator 21 wird der Läufer 20 in die entgegensetzte Richtung beschleunigt. Mittels eines ständigen Wechsels der Stromrichtung oszilliert der Läufer 20. Eine Oszillationsfrequenz jedes Messerbalkensegments 17,18,19 ist somit unter anderem abhängig von einer Frequenz, mit der die Stromrichtung des Wechselstroms invertiert wird. Durch Änderung der Stromstärke kann hingegen eine Oszillationsgeschwindigkeit und/oder eine Oszillationsamplitude verändert werden.
Des Weiteren sind vorzugsweise beidseitig am Läufer 20 Rückstellfedern 23 angebracht. Die Rückstellfedern 23 dienen der Unterstützung der Oszillation des Läufers 20 und damit der Messerbalkensegmente 17,18,19. Der Läufer 20 weist durch die Rückstellfedern 23 eine Ruheposition auf, bei der sich die Kräfte beider Rückstellfedern 23 ausgleichen. Bei Auslenkung aus der Ruheposition wirkt somit stets eine entgegengesetzt wirkende Kraft auf, die in Richtung der Ruheposition weist. Zudem begrenzen die Rückstellfedern 23 eine Oszillationsamplitude des Läufers 20 in beiden Oszillationsrichtungen. Die Rückstellfedern 23 können als Schraubenfedern, Blattfedern oder andere Federtypen oder Dämpfungssysteme ausgebildet sein.
Im vorliegenden Ausführungsbeispiel weist der Messerbalken 10 drei Linearantriebe 16 und das Wechselspannungsnetz 26 drei Phasen 27,28,29 auf. Es liegt jedoch im Rahmen der Erfindung, eine abweichende Anzahl von elektrischen Antrieben 15 und/oder Phasen 27,28,29 im Wechselspannungsnetz 26 zu verwenden.
Durch den Phasenversatz der Wechselspannung in den einzelnen Phasen 27,28,29 bewegen sich die Läufer 20 der elektrischen Antriebe 15 phasenversetzt zueinander. Dadurch werden die angeordneten Messerbalkensegmente 17,18,19 ebenfalls phasenversetzt zueinander betrieben. Somit hängt der Phasenversatz der Oszillation der Messerbalkensegmente 17,18,19 direkt vom Phasenversatz der Wechselspannungen in den Phasen 27,28,29 ab. Der Begriff Phasenversatz beschreibt hier somit zum einen einen Versatz einer elektrischen Schwingung der Wechselspannung in einer Phase 27,28,29 zu einer elektrischen Schwingung der Wechselspannung in einer anderen Phase 27,28,29. Zum anderen beschreibt der Begriff Phasenversatz bei der linearen Oszillation der Läufer 20 der Linearantriebe 16 und/oder der Messerbalkensegmente 17,18,19 einen räumlichen Versatz der Messerbalkensegmente 17,18,19 zueinander zu jedem Zeitpunkt der Oszillation. Sämtliche Phasenversätze sind auf ein 360° Winkelkoordinatensystem projizierbar und in Grad angebbar.
Vorzugsweise sind die Wechselspannungen jeder Phase 27,28,29 um den gleichen Betrag von den anderen Phasen 27,28,29 versetzt. Dadurch weisen auch die Läufer 20 der Linearantriebe 16 und/oder die Messerbalkensegmente 17,18,19 vorzugsweise den gleichen Phasenversatz auf. Auf diese Weise werden die durch die elektrischen Antriebe 15 und die Messerbalkensegmente 17,18,19 verursachten Querschwingungen am wirkungsvollsten neutralisiert.
So liegt beispielsweise bei drei Phasen 27,28,29 und drei elektrischen Antrieben 15 jeweils ein Phasenversatz von 120° zwischen den Wechselspannungen der drei Phasen 27,28,29 vor. Bei gleichem Phasenversatz werden Querschwingungen jedes elektrischen Antriebes 15 durch die Querschwingungen der anderen elektrischen Antriebe 15 zu großen Teilen neutralisiert. Ebenso werden bei gleichem Phasenversatz Querschwingungen jedes Messerbalkensegments 17,18,19 durch die Querschwingungen der anderen Messerbalkensegmente 17,18,19 zu großen Teilen neutralisiert. Ihr gemeinsamer Schwerpunkt bleibt in Ruhe und es werden kaum Querschwingungen des Schneidwerks 1 als Ganzes angeregt.

Die selbstfahrende Erntemaschine 2 und/oder das Schneidwerk 1 weist zudem eine Steuer- und Regeleinheit 25 auf, die unter anderem dazu eingerichtet sein kann, die elektrischen Antriebe 15 zu steuern. Dazu kann das Schneidwerk 1 Sensorsysteme, wie zum Beispiel Wegsensoren, Stromstärke- und Spannungsmessvorrichtungen aufweisen, um unter anderem eine Leistungsaufnahme der elektrischen Antriebe 15, eine Belastung der Messerbalkensegmente 17,18,19 mit Erntegut, die Oszillationsfrequenz der Läufer 20 und/oder der Messerbalkensegmente 17,18,19 und den Phasenversatz der Läufer 20 und/oder der Messerbalkensegmente 17,18,19 zu überwachen.

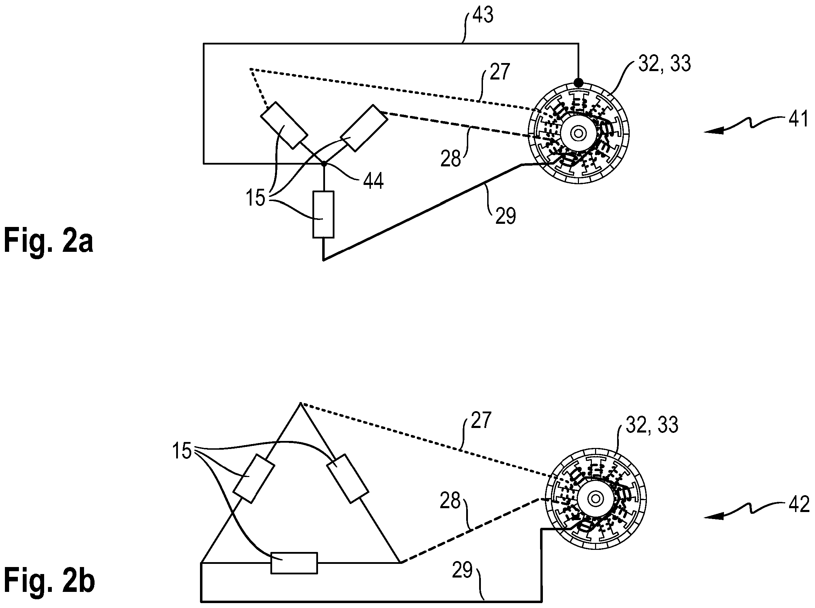

Figur 2 zeigt eine schematische Darstellung zweier alternativer erfindungsgemäßer Verschaltungen der elektrischen Antriebe 15 mit dem Generator 32 und zwar in (a) eine Sternschaltung 41 und in (b) eine Dreieckschaltung 42. Die Sternschaltung 41 und die Dreieckschaltung 42 sind in einer an sich bekannten Weise ausgebildet, weshalb im Folgenden der Aufbau und das Prinzip nicht im Detail erläutert wird. Dabei sind in einer Sternschaltung 41 alle Phasen 27,28,29 in einem Sternpunkt 44 miteinander verschaltet. Bei der Dreieckschaltung 42 werden die Phasen 27,28,29 in Reihe geschaltet.

Vorzugsweise sind die elektrischen Antriebe 15 und die Wechselspannungsquelle 33 in einer Sternschaltung 41 miteinander verschaltet. Dabei ist bevorzugt jedem elektrischen Antrieb 15 jeweils eine Phase 27,28,29 des Wechselspannungsnetzes 26 zugeordnet. Das Wechselspannungsnetz 26 weist dazu mindestens zwei Phasen 27,28,29 auf. Alle elektrischen Antriebe 15 sind zudem in einem Sternpunkt 44 elektrisch miteinander verbunden. Bevorzugt weißt die Sternschaltung 41 zudem einen Neutralleiter 43 auf, der an dem Sternpunkt 44 angeschlossen ist. Der Neutralleiter 43 gleicht dabei ungleiche Ströme in den Phasen 27,28,29 aus, wie sie zum Beispiel bei unterschiedlichen Belastungen der elektrischen Antriebe 15 auftreten können.

In einer weiteren Ausgestaltungsform sind die elektrischen Antriebe 15 und die Wechselspannungsquelle 33 vorzugsweise in einer Dreieckschaltung 42 miteinander verschaltet. Dabei ist vorzugsweise jedem elektrischen Antrieb 15 jeweils eine Kombination aus zwei Phasen 27,28,29 des Wechselspannungsnetzes 26 zugeordnet ist. Das Wechselspannungsnetz 26 weist dazu mindestens drei Phasen 27,28,29 auf. Die Dreieckschaltung 42 kann ebenso eine gleichwirkende und analog aufgebaute Polygonschaltung mit mehr als drei Phasen 27,28,29 und mehr als drei elektrischen Antrieben 15 umfassen.

Vorzugsweise ist bei einer identischen Anzahl an elektrischen Antrieben 15 und Phasen 27,28,29 jedem elektrischen Antrieb 15 jeweils eine Phase 27,28,29 zugeordnet. Alternativ ist bei einer identischen Anzahl an elektrischen Antrieben 15 und Phasen 27,28,29 jedem elektrischen Antrieb 15 jeweils eine Kombination von zwei Phasen 27,28,29 zugeordnet. Dadurch ist der Phasenversatz für sämtliche Phasen 27,28,29 und Messerbalkensegmente 17,18,19 gleich groß. Jeder elektrische Antrieb 15 arbeitet phasenversetzt zu allen anderen elektrischen Antrieben 15, sodass die gemeinsamen Querschwingungen optimal kompensiert werden, da sie sich gegenseitig nahezu aufheben.

Bevorzugt sind bei einer abweichenden Anzahl an elektrischen Antrieben 15 und Phasen 27,28,29 die einzelnen Phasen 27,28,29 oder Kombinationen von zwei Phasen 27,28,29 im Wesentlichen gleichverteilt den elektrischen Antrieben 15 zugeordnet. Dabei gibt es folgende Fälle zu unterscheiden, wobei in Gruppen gruppierte elektrische Antriebe 15 bevorzugt in Reihe geschaltet sind. Alternativ ist es denkbar, die elektrischen Antriebe 15 einer Gruppe parallel zu verschalten. In einem ersten Fall entspricht die Anzahl an elektrischen Antrieben 15 einem ganzzahligen Vielfachen der Anzahl der Phasen 27,28,29, wobei dann jeweils die gleiche Anzahl von elektrischen Antrieben 15 entsprechend dem Vielfachen in Gruppen zusammengefasst wird und jede Gruppe an jeweils eine Phase 27,28,29 angeschlossen wird. In einem weiteren Fall entspricht die Anzahl der Phasen 27,28,29 einem ganzzahligen Vielfachen der elektrischen Antriebe 15, wobei dann einzelne Phasen 27,28,29 nicht für die elektrischen Antriebe 15 verwendet werden. Dabei bleibt vorzugsweise die Bedingung erfüllt, dass die Wechselspannungen der genutzten Phasen 27,28,29 um den gleichen Betrag von den anderen genutzten Phasen 27,28,29 versetzt sind und zusammen 360° ergeben. In einem nächsten Fall ist die Anzahl der elektrischen Antriebe 15 größer als die Anzahl der Phasen 27,28,29 und entspricht nicht einem ganzzahligen Vielfachen der Anzahl der Phasen 27,28,29, wobei dann zuerst die elektrischen Antriebe 15 auf die Phasen 27,28,29 gleichverteilt werden und überzählige elektrische Antriebe 15 auf bereits verwendete Phase 27,28,29 verteilt werden, wobei sich die Anzahl der elektrischen Antriebe 15 pro Phase 27,28,29 um nicht mehr als einen elektrischen Antrieb 15 unterscheiden. In einem zusätzlichen Fall ist die Anzahl der elektrischen Antriebe 15 kleiner als die Anzahl der Phasen 27,28,29 und die Anzahl der Phasen 27,28,29 entspricht nicht einem ganzzahligen Vielfachen der Anzahl der elektrischen Antriebe 15, wobei dann jedem elektrischen Antrieb 15 eine Phase 27,28,29 zugeordnet werden kann und überzählige Phasen 27,28,29 nicht verwendet werden.

In einer weiteren Ausgestaltung der Erfindung kann die Anzahl der Phasen 27,28,29 mittels Hinzufügen von weiteren Generatoren 32 an die Anzahl der elektrischen Antriebe 15 angepasst werden, falls die Anzahl der Phasen 27,28,29 des Wechselspannungsnetzes 26 und/oder des Generators 32 nicht ausreicht. Dazu kann das Schneidwerk 1 und/oder die selbstfahrende Erntemaschine 2 neben einem ersten Wechselspannungsnetz 26 mit zumindest zwei Phasen 27,28,29 und einem ersten Generator 32 zusätzlich mindestens ein weiteres Wechselspannungsnetz 26 mit zumindest zwei weiteren Phasen 27,28,29 und einem weiteren Generator 32 aufweisen. Dabei sind die Generatoren 32 vorzugsweise mechanisch kraftschlüssig miteinander gekoppelt. Zum Beispiel können die Generatoren 32 mittels eines Zahnriemens miteinander kraftschlüssig gekoppelt sein. Vorzugsweise ist nur der Zahnriemen dann von dem Fahrzeugantrieb 34 angetrieben. Dadurch sind die Generatoren 32 bereits antriebsseitig miteinander verbunden, wodurch auch der Phasenversatz der Wechselspannungen beider Wechselspannungsnetzte 26 aneinander gekoppelt ist. Bevorzugt addieren sich bei den Phasenversätzen beider Wechselspannungsnetze 26 und/oder sämtlicher Messerbalkensegmente 17,18,19 zu 360° oder einem Vielfachen davon. In einer bevorzugten Ausgestaltung weist das Schneidwerk 1 und/oder die selbstfahrende Erntemaschine 2 ein Wechselspannungsnetz 26 mit drei Phasen 27,28,29, einen Generator 32 mit den gleichen Phasen 27,28,29 und einem Messerbalken 10 mit drei Messerbalkensegmente 17,18,19 auf, wobei jedem Messerbalkensegment 17,18,19 ein Linearantrieb 16 zugeordnet ist, und jedem Linearantrieb 16 jeweils eine der Phasen 27,28,29 mittels einer Sternschaltung 41 zugeordnet ist, sodass jedes Messerbalkensegment 17,18,19 phasenversetzt linear oszillierend angetrieben wird.
Dabei ist jeder Linearantrieb 16 an eine der Phasen 27,28,29 angeschlossen. Vorzugsweise ist dabei jeder Linearantrieb 16 an eine andere der Phasen 27,28,29 angeschlossen. Folglich werden die Messerbalkensegmente 17,18,19 örtlich um 120° phasenversetzt zueinander angetrieben. Vorzugsweise weist die Sternschaltung 41 einen Neutralleiter 43 auf.

In einer weiteren bevorzugten Ausgestaltung weist das Schneidwerk 1 und/oder die selbstfahrende Erntemaschine 2 ein Wechselspannungsnetz 26 mit drei Phasen 27,28,29, einen Generator 32 mit den gleichen Phasen 27,28,29 und der Messerbalken 10 drei Messerbalkensegmente 17,18,19 auf, wobei jedem Messerbalkensegment 17,18,19 ein Linearantrieb 16 zugeordnet ist, und jedem Linearantrieb 16 jeweils eine der Kombinationen von zwei Phasen 27,28,29 mittels einer Dreieckschaltung 42 zugeordnet ist, sodass jedes Messerbalkensegment 17,18,19 phasenversetzt linear oszillierend angetrieben wird. Dabei ist vorzugsweise jedem Linearantrieb 16 jeweils eine andere Kombination von zwei Phasen 27,28,29 angeschlossen. Folglich werden die Messerbalkensegmente 17,18,19 örtlich um 120° phasenversetzt zueinander angetrieben.

### Bezugszeichenliste

- 1: Schneidwerk
- 2: Selbstfahrende Erntemaschine
- 3: Trägerrahmen
- 4: Schneidtisch
- 5: Seitenwangen des Schneidwerks
- 6: Querförderschnecke
- 7: Vorderkante des Schneidtisches
- 8: Haspel
- 10: Messerbalken
- 12: Klingen
- 13: Gegenschneiden
- 15: Elektrischer Antrieb
- 16: Linearantrieb
- 17: Erstes Messerbalkensegment
- 18: Zweites Messerbalkensegment
- 19: Drittes Messerbalkensegment
- 20: Läufer
- 21: Stator
- 22: Beschläge
- 23: Rückstellfeder
- 25: Steuer- und Regeleinheit
- 26: Wechselspannungsnetz
- 27: Erste Phase
- 28: Zweite Phase
- 29: Dritte Phase
- 32: Generator
- 33: Wechselspannungsquelle
- 34: Fahrzeugantrieb
- 41: Sternschaltung
- 42: Dreieckschaltung
- 43: Neutralleiter
- 44: Sternpunkt

## Patentansprüche

1. Schneidwerk (1) für eine selbstfahrende Erntemaschine (2) mit einem mehrteiligen Messerbalken (10), wobei der Messerbalken (10) mindestens zwei Messerbalkensegmente (17,18,19) umfasst, wobei
jedem Messerbalkensegment (17,18,19) ein elektrischer Antrieb (15) zugeordnet ist, und die Messerbalkensegmente (17,18,19) mittels der elektrischen Antriebe (15) linear oszillierend antreibbar sind,
**dadurch gekennzeichnet, dass**
das Schneidwerk (1) ein Wechselspannungsnetz (26) mit zumindest zwei Phasen (27,28,29) aufweist, wobei das Wechselspannungsnetz (26) dazu vorgesehen und eingerichtet ist an einer Wechselspannungsquelle (33) mit Phasen (27,28,29) betrieben zu werden, wobei jede der Phasen (27,28,29) eine zueinander phasenversetzte Wechselspannung aufweist, und jedem elektrischen Antrieb (15) zumindest eine der Phasen (27,28,29) zugeordnet ist.

2. Schneidwerk (1) nach Anspruch 1,
**dadurch gekennzeichnet, dass**
die Phasen (27,28,29) den elektrischen Antrieben (15) derart zugeordnet sind, dass die elektrischen Antriebe (15) mit zueinander phasenversetzten Wechselspannungen angetrieben werden und die elektrischen Antriebe (15) die Messerbalkensegmente (17,18,19) phasenversetzt linear oszillierend antreiben.

3. Schneidwerk (1) nach einem der vorhergehenden Ansprüche,
**dadurch gekennzeichnet, dass**
das Schneidwerk (1) eine als Generator (32), insbesondere als Drehstromgenerator, ausgebildete Wechselspannungsquelle (33) mit Phasen (27,28,29) aufweist, und jeder elektrische Antrieb (15) an jeweils eine Phase (27,28,29) des Generators (32) oder zwischen zwei Phasen (27,28,29) des Generators (32) angeschlossen ist.

4. Schneidwerk (1) nach einem der vorhergehenden Ansprüche,
**dadurch gekennzeichnet, dass**
die elektrischen Antriebe (15) und die Wechselspannungsquelle (33) in einer Sternschaltung (41) miteinander verschaltet sind, sodass jedem elektrischen Antrieb (15) jeweils eine Phase (27,28,29) des Wechselspannungsnetzes (26) zugeordnet ist.

5. Schneidwerk (1) nach einem der vorhergehenden Ansprüche,
**dadurch gekennzeichnet, dass**
die elektrischen Antriebe (15) und die Wechselspannungsquelle (33) in einer Dreieckschaltung (42) miteinander verschaltet sind, sodass jedem elektrischen Antrieb (15) jeweils eine Kombination aus zwei Phasen (27,28,29) des Wechselspannungsnetzes (26) zugeordnet ist.

6. Schneidwerk (1) nach einem der vorhergehenden Ansprüche,
**dadurch gekennzeichnet, dass**
bei einer identischen Anzahl an elektrischen Antrieben (15) und Phasen (27,28,29) jedem elektrischen Antrieb (15) jeweils eine Phase (27,28,29) oder jeweils eine Kombination von zwei Phasen (27,28,29) zugeordnet ist.

7. Schneidwerk (1) nach einem der vorhergehenden Ansprüche,
**dadurch gekennzeichnet, dass**
bei einer abweichenden Anzahl an elektrischen Antrieben (15) und Phasen (27,28,29) die einzelnen Phasen (27,28,29) oder Kombinationen von zwei Phasen (27,28,29) im Wesentlichen gleichverteilt den elektrischen Antrieben (15) zugeordnet sind.

8. Schneidwerk (1) nach einem der vorhergehenden Ansprüche,
**dadurch gekennzeichnet, dass**
das Schneidwerk (1) ein erstes Wechselspannungsnetz (26) mit zumindest zwei Phasen (27,28,29) und einem ersten Generator (32), und mindestens ein weiteres Wechselspannungsnetz (26) mit zumindest zwei weiteren Phasen (27,28,29) und einem weiteren Generator (32) aufweist, wobei die Generatoren (32) mechanisch miteinander gekoppelt sind.

9. Schneidwerk (1) nach einem der vorhergehenden Ansprüche,
**dadurch gekennzeichnet, dass**
die elektrischen Antriebe (15) Linearantriebe (16) sind und phasenversetzt zueinander linear oszillierend betrieben werden.

10. Schneidwerk (1) nach einem der vorhergehenden Ansprüche,
**dadurch gekennzeichnet, dass**
das Schneidwerk (1) ein Wechselspannungsnetz (26) mit drei Phasen (27,28,29), einen Generator (32) mit den gleichen Phasen (27,28,29) und der Messerbalken (10) drei Messerbalkensegmente (17,18,19) aufweist,
wobei jedem Messerbalkensegment (17,18,19) ein Linearantrieb (16) zugeordnet ist, und jedem Linearantrieb (16) jeweils eine der Phasen (27,28,29) mittels einer Sternschaltung (41) zugeordnet ist, sodass jedes Messerbalkensegment (17,18,19) phasenversetzt linear oszillierend angetrieben wird.

11. Schneidwerk (1) nach einem der vorhergehenden Ansprüche,
**dadurch gekennzeichnet, dass**
das Schneidwerk (1) ein Wechselspannungsnetz (26) mit drei Phasen (27,28,29), einen Generator (32) mit den gleichen Phasen (27,28,29) und der Messerbalken (10) drei Messerbalkensegmente (17,18,19) aufweist,
wobei jedem Messerbalkensegment (17,18,19) ein Linearantrieb (16) zugeordnet ist, und jedem Linearantrieb (16) jeweils eine der Kombinationen von zwei Phasen (27,28,29) mittels einer Dreieckschaltung (42) zugeordnet ist, sodass jedes Messerbalkensegment (17,18,19) phasenversetzt linear oszillierend angetrieben wird.

12. Selbstfahrende Erntemaschine (2) mit einem Schneidwerk (1) mit einem mehrteiligen Messerbalken (10), wobei der Messerbalken (10) mindestens zwei Messerbalkensegmente (17,18,19) umfasst, wobei
jedem Messerbalkensegment (17,18,19) ein elektrischer Antrieb (15) zugeordnet ist, und die Messerbalkensegmente (17,18,19) mittels der elektrischen Antriebe (15) linear oszillierend antreibbar sind,
**dadurch gekennzeichnet, dass**
das Schneidwerk (1) und die selbstfahrende Erntemaschine (2) ein Wechselspannungsnetz (26) mit zumindest zwei Phasen (27,28,29) aufweisen, wobei jede
der Phasen (27,28,29) eine zueinander phasenversetzte Wechselspannung aufweist, und jedem elektrischen Antrieb (15) zumindest eine der Phasen (27,28,29) zugeordnet ist, wobei die selbstfahrende Erntemaschine (2) eine als Generator (32), insbesondere als Drehstromgenerator, ausgebildete Wechselspannungsquelle (33) mit Phasen (27,28,29) aufweist, und jeder elektrische Antrieb (15) an jeweils eine Phase (27,28,29) des Generators (32) oder zwischen zwei Phasen (27,28,29) des Generators (32) angeschlossen ist.

## Claims

1. A cutting assembly (1) for a self-propelled harvesting machine (2), having a multi-component cutter bar (10), wherein the cutter bar (10) comprises at least two cutter bar segments (17, 18, 19), wherein
an electrical actuator (15) is associated with each cutter bar segment (17, 18, 19), and the cutter bar segments (17, 18, 19) can be actuated in linear oscillation by means of the electrical actuator (15),
**characterized in that**
the cutting assembly (1) has an alternating voltage supply system (26) with at least two phases (27, 28, 29), wherein the alternating voltage supply system (26) is provided and configured to be supplied with phases (27, 28, 29) from an alternating voltage source (33), wherein each of the phases (27, 28, 29) has a mutually phase-shifted alternating voltage, and at least one of the phases (27, 28, 29) is associated with each electrical actuator (15).

2. The cutting assembly (1) according to claim 1,
**characterized in that**
the phases (27, 28, 29) of the electrical actuator (15) are associated in a manner such that the electrical actuators (15) are operated with mutually phase-shifted alternating voltages and the electrical actuators (15) actuate the cutter bar segments (17, 18, 19) in phase-shifted linear oscillation.

3. The cutting assembly (1) according to one of the preceding claims,
**characterized in that**
the cutting assembly (1) has an alternating voltage source (33) with phases (27, 28, 29) configured as a generator (32), in particular as a three-phase generator, and each electrical actuator (15) is connected to a respective phase (27, 28, 29) of the generator (32) or between two phases (27, 28, 29) of the generator (32).

4. The cutting assembly (1) according to one of the preceding claims,
**characterized in that**
the electrical actuator (15) and the alternating voltage source (33) are connected together in a Y connection (41) so that a respective phase (27, 28, 29) of the alternating voltage supply system (26) is associated with each electrical actuator (15).

5. The cutting assembly (1) according to one of the preceding claims,
**characterized in that**
the electrical actuator (15) and the alternating voltage source (33) are connected together in a delta connection (42) so that a respective combination of two phases (27, 28, 29) of the alternating voltage supply system (26) is associated with each electrical actuator (15).

6. The cutting assembly (1) according to one of the preceding claims,
**characterized in that**
when the number of electrical actuators (15) and phases (27, 28, 29) is identical, a respective phase (27, 28, 29) or a respective combination of two phases (27, 28, 29) is associated with each electrical actuator (15).

7. The cutting assembly (1) according to one of the preceding claims,
**characterized in that**
when the number of electrical actuators (15) and phases (27, 28, 29) is different, the individual phases (27, 28, 29) or combinations of two phases (27, 28, 29) is associated with the electrical actuators (15) in a substantially evenly distributed manner.

8. The cutting assembly (1) according to one of the preceding claims,
**characterized in that**
the cutting assembly (1) has a first alternating voltage supply system (26) with at least two phases (27, 28, 29) and a first generator (32), and at least one further alternating voltage supply system (26) with at least two further phases (27, 28, 29) and a further generator (32), wherein the generators (32) are coupled together mechanically.

9. The cutting assembly (1) according to one of the preceding claims,
**characterized in that**
the electrical actuators (15) are linear drives (16) and are operated in mutually phase-shifted linear oscillation.

10. The cutting assembly (1) according to one of the preceding claims,
**characterized in that**
the cutting assembly (1) has an alternating voltage supply system (26) with three phases (27, 28, 29), a generator (32) with the identical phases (27, 28, 29), and the cutter bar (10) has three cutter bar segments (17, 18, 19),
wherein a linear drive (16) is associated with each cutter bar segment (17, 18, 19) and a respective one of the phases (27, 28, 29) is associated with each linear drive (16) by means of the Y connection (41), so that each cutter bar segment (17, 18, 19) is actuated in mutually phase-shifted linear oscillation.

11. The cutting assembly (1) according to one of the preceding claims, **characterized in that**
the cutting assembly (1) has an alternating voltage supply system (26) with three phases (27, 28, 29), a generator (32) with the identical phases (27, 28, 29), and the cutter bar (10) has three cutter bar segments (17, 18, 19),
wherein a linear drive (16) is associated with each cutter bar segment (17, 18, 19) and a respective one of the combinations of two phases (27, 28, 29) is associated with each linear drive (16) by means of the delta connection (42), so that each cutter bar segment (17, 18, 19) is actuated in mutually phase-shifted linear oscillation.

12. A self-propelled harvest machine (2) with a cutting assembly (1) having a multi-component cutter bar (10), wherein the cutter bar (10) comprises at least two cutter bar segments (17, 18, 19), wherein
an electrical actuator (15) is associated with each cutter bar segment (17, 18, 19), and the cutter bar segments (17, 18, 19) can be actuated in linear oscillation by means of the electrical actuator (15),
**characterized in that**
the cutting assembly (1) and the self-propelled harvesting machine (2) have an alternating voltage supply system (26) with at least two phases (27, 28, 29), wherein each of the phases (27, 28, 29) has a mutually phase-shifted alternating voltage, and at least one of the phases (27, 28, 29) is associated with each electrical actuator (15), wherein the self-propelled harvesting machine (2) has an alternating voltage source (33) with phases (27, 28, 29) configured as a generator (32), in particular as a three-phase generator, and each electrical actuator (15) is connected to a respective phase (27, 28, 29) of the generator (32) or between two phases (27, 28, 29) of the generator (32).

## Revendications

1. Tablier de coupe (1) pour une machine de récolte automotrice (2) comprenant une barre porte-lames en plusieurs parties (10), la barre porte-lames (10) incluant au moins deux segments de barre porte-lames (17, 18, 19), à chaque segment de barre porte-lames (17, 18, 19) étant associé un moyen d'entraînement électrique (15), et les segments de barre porte-lames (17, 18, 19) étant entraînables de manière linéairement oscillante à l'aide des moyens d'entraînement électrique (15), **caractérisé en ce que** le tablier de coupe (1) comporte un circuit de tension alternative (26) avec au moins deux phases (27, 28, 29), le circuit de tension alternative (26) étant prévu et agencé pour être alimenté par une source de tension alternative (33) avec des phases (27, 28, 29), chacune des phases (27, 28, 29) comportant une tension alternative déphasée par rapport aux autres, et à chaque moyen d'entraînement électrique (15) étant associée au moins une des phases (27, 28, 29).

2. Tablier de coupe (1) selon la revendication 1, **caractérisé en ce que** les phases (27, 28, 29) sont associées aux moyens d'entraînement électrique (15), de façon que les moyens d'entraînement électrique (15) soient entraînés avec des tensions alternatives déphasées par rapport aux autres et que les moyens d'entraînement électrique (15) entraînent les segments de barre porte-lames (17, 18, 19) de manière linéairement oscillante et déphasée.

3. Tablier de coupe (1) selon une des revendications précédentes, **caractérisé en ce que** le tablier de coupe (1) comporte une source de tension alternative (33) conformée en générateur (32), en particulier en générateur à courant triphasé, avec des phases (27, 28, 29), et chaque moyen d'entraînement électrique (15) est relié à respectivement une phase (27, 28, 29) du générateur (32) ou entre deux phases (27, 28, 29) du générateur (32).

4. Tablier de coupe (1) selon une des revendications précédentes, **caractérisé en ce que** les moyens d'entraînement électrique (15) et la source de tension alternative (33) sont reliés entre eux selon un montage en étoile (41), de sorte qu'à chaque moyen d'entraînement électrique (15) est associée respectivement une phase (27, 28, 29) du circuit de tension alternative (26).

5. Tablier de coupe (1) selon une des revendications précédentes, **caractérisé en ce que** les moyens d'entraînement électrique (15) et la source de tension alternative (33) sont reliés entre eux selon un montage en triangle (42), de sorte qu'à chaque moyen d'entraînement électrique (15) est associée respectivement une combinaison de deux phases (27, 28, 29) du circuit de tension alternative (26).

6. Tablier de coupe (1) selon une des revendications précédentes, **caractérisé en ce qu'**en cas de nombre identique de moyens d'entraînement électrique (15) et de phases (27, 28, 29), respectivement une phase (27, 28, 29) ou respectivement une combinaison de deux phases (27, 28, 29) est associée à chaque moyen d'entraînement électrique (15).

7. Tablier de coupe (1) selon une des revendications précédentes, **caractérisé en ce qu'**en cas de nombre différent de moyens d'entraînement électrique (15) et de phases (27, 28, 29), les diverses phases (27, 28, 29) ou combinaisons de deux phases (27, 28, 29) sont associées aux moyens d'entraînement électrique (15) selon une distribution sensiblement régulière.

8. Tablier de coupe (1) selon une des revendications précédentes, **caractérisé en ce que** le tablier de coupe (1) comprend un premier circuit de tension alternative (26) avec au moins deux phases (27, 28, 29) et avec un premier générateur (32), et au moins un circuit de tension alternative supplémentaire (26) avec au moins deux phases supplémentaires (27, 28, 29) et avec un générateur supplémentaire (32), les générateurs (32) étant couplés entre eux mécaniquement.

9. Tablier de coupe (1) selon une des revendications précédentes, **caractérisé en ce que** les moyens d'entraînement électrique (15) sont des moyens d'entraînement linéaire (16) et fonctionnent de manière linéairement oscillante et déphasée les uns par rapport aux autres.

10. Tablier de coupe (1) selon une des revendications précédentes, **caractérisé en ce que** le tablier de coupe (1) comprend un circuit de tension alternative (26) à trois phases (27, 28, 29), un générateur (32) avec des phases identiques (27, 28, 29), et la barre porte-lames (10) comprend trois segments de barre porte-lames (17, 18, 19), à chaque segment de barre porte-lames (17, 18, 19) étant associé un moyen d'entraînement linéaire (16), et à chaque moyen d'entraînement linéaire (16) étant associée respectivement une des phases (27, 28, 29) au moyen d'un montage en étoile (41), de sorte que chaque segment de barre porte-lames (17, 18, 19) est entraîné de manière linéairement oscillante et déphasée.

11. Tablier de coupe (1) selon une des revendications précédentes, **caractérisé en ce que** le tablier de coupe (1) comprend un circuit de tension alternative (26) à trois phases (27, 28, 29), un générateur (32) avec des phases identiques (27, 28, 29), et la barre porte-lames (10) comprend trois segments de barre porte-lames (17, 18, 19), à chaque segment de barre porte-lames (17, 18, 19) étant associé un moyen d'entraînement linéaire (16), et à chaque moyen d'entraînement linéaire (16) étant associée respectivement une des combinaisons de deux phases (27, 28, 29) au moyen d'un montage en triangle (42), de sorte que chaque segment de barre porte-lames (17, 18, 19) est entraîné de manière linéairement oscillante et déphasée.

12. Machine de récolte automotrice (2) comprenant un tablier de coupe (1) avec une barre porte-lames en plusieurs parties (10), la barre porte-lames (10) incluant au moins deux segments de barre porte-lames (17, 18, 19), à chaque segment de barre porte-lames (17, 18, 19) étant associé un moyen d'entraînement électrique (15), et les segments de barre porte-lames (17, 18, 19) étant entraînables de manière linéairement oscillante à l'aide des moyens d'entraînement électrique (15), **caractérisée en ce que** le tablier de coupe (1) et la machine de récolte automotrice (2) comportent un circuit de tension alternative (26) avec au moins deux phases (27, 28, 29), chacune des phases (27, 28, 29) comportant une tension alternative déphasée par rapport aux autres, et à chaque moyen d'entraînement électrique (15) étant associée au moins une des phases (27, 28, 29), la machine de récolte automotrice (2) comportant une source de tension alternative (33) conformée en générateur (32), en particulier en générateur à courant triphasé, avec des phases (27, 28, 29), et chaque moyen d'entraînement électrique (15) étant relié à respectivement une phase (27, 28, 29) du générateur (32) ou entre deux phases (27, 28, 29) du générateur (32).
